# EUROPÄISCHE PATENTSCHRIFT

(11) **EP 2 440 860 B1**
(45) Veröffentlichungstag und Bekanntmachung des Hinweises auf die Patenterteilung: **04.05.2016**
(21) Anmeldenummer: 10722538.5
(22) Anmeldetag: 16.03.2010
(51) Int. Cl.: F24J 2/52, E04D 13/18, H01L 31/048

(54) **ADAPTER FÜR TRÄGERPROFILE**
ADAPTER FOR SUPPORT PROFILES
ADAPTATEUR POUR PROFILÉS DE SUPPORT

(30) Priorität: 17.03.2009 DE 202009003661 U
(43) Veröffentlichungstag der Anmeldung: 18.04.2012
(73) Patentinhaber: LORENZ-Montagesysteme GmbH, 50828 Köln (DE)
(72) Erfinder: SCHMOTZ, Gerd, 53332 Bornheim (DE)
(74) Vertreter: Kayser, Christoph
(86) Internationale Anmeldenummer: PCT/DE2010/000288
(87) Internationale Veröffentlichungsnummer: WO 2010/105604

(56) Entgegenhaltungen:
- DE-A1-102004 044 103
- DE-U1-202006 018 426
- JP-A- 11 013 238
- US-A- 1 281 531
- US-B1- 6 205 719

## Beschreibung

Insbesondere Solarmodule bedürfen einer stabilen und dauerhaften Befestigung auf Dächern oder sonstigen Flächen. Bewährt haben sich Anordnungen von Profilschienen, auf denen die Solarmodule aufliegen und mittels Klammern oder Haltern fixiert sind. Aufgrund von Wind- und/oder Schneelasten wirken bei sämtlichen Befestigungsarten hohe Kräfte auf die Einzelnen Bauteile der jeweiligen Anordnung. Dabei sind insbesondere die jeweiligen Verbindungen zwischen den einzelnen Bauteilen kritisch. Verbindungen zwischen Profilschienen und den darunter liegenden Trägerelementen werden herkömmlicherweise durch Schraubverbindungen zwischen einer Seitenfläche eines Vierkantprofils und einer sogenannten Fahne geschaffen, die üblicherweise einen im Allgemeinen in etwa senkrecht zu den Solarmodulen angeordneten Halteabschnitt eines Dachträgerauslegars aufweist.

So beschreibt beispielsweise DE 202004019952 U1 ein Dachträgerelement, das eine Grundplatte zur Montage auf Konterlattung oder Dachsparren aufweist, an dem ein U-förmiger Ausleger befestigt ist, der in einen senkrecht zu Konterlattung oder Sparren stehenden, mit Langloch versehenen Abschnitt mündet, der gemeinhin als Fahne bezeichnet wird. Mittels Hammerkopfschrauben kann die Fahne mit der Seitenfläche einer Profilschiene verbunden werden. Die einseitige und asymetrische Verbindung von Dachträger und Profilschiene weist einen gravierenden Nachteil auf. Die Krafteinleitung bei Belastung der Konstruktion durch Wind- und/oder Schneelasten findet nicht gleichmäßig statt mit der Folge, dass materialermüdende Torsionskräfte wirksam werden können.

Die DE 20 2006 0184226 U1 offenbart einen schienenartig ausgebildeten Halteabschnitt mit aufgrund geringer Materialstärke elastischen Seitenwänden, in denen nach innen gerichtete Rastlaschen ausgebildet sind, die als Rückhaltemittel für in den Schienenabschnitt eingebrachte Profilschienen mit von den Seitenwänden der Profilschienen abstehenden, greifbaren Kanten dienen. Der Kraftschluss zwischen den zu fixierenden Profilschienen und dem Halteabschnitt ist dabei durch die Federkraft der Seitenwände des Halteabschnitts bedingt. Die US 6,205,719 B1 offenbart eine V-förmige Klemme mit Aufnahmen für eine Stange, die mit ihren freien Enden in ein Hohlprofil mit nach innen gerichteten Abkantungen an einer seiner Seitenwände in Eingriff steht und mittels einer Schraube, die einen Schenkel der Klemme durchdringt, durch Aufspreizung der Klemme fixiert wird. In beiden vorgenannten Druckschriften ist der Formschluss zwischen Halter und Profil verbesserungswürdig, um die von der Verbindung zwischen diesen Bauteilen aufzunehmenden Kräfte im Verhältnis zur Materialstärke des Halters zu optimieren.

Die JP 11 013238 A offenbart genutete Hohlprofile, die von starren U-Profilabschnitten umfasst und mit diesen verschraubt werden, wobei die Schraube ein senkrecht zur Stegfläche des U-Profilabschnitts ausgerichtetes Langloch durchdringt und von einer in einer Nut des Hohlprofils angeordneten Mutter gehalten wird. Hierbei sind Handhabung und Einbringung der Muttern in die Nuten des Hohlprofils aufwändig.

EP 000001956250 A2 offenbart eine zentrische Anbringung einer Profilschiene an einem Befestigungsabschnitt, wobei die Profilschiene ein zentrisch angeordnetes Gewinde aufweist und der Befestigungsabschnitt mit an Form und Ausmaß der Profilschiene angepassten Leisten versehen ist. Der Vorteil einer für die Krafteinleitung in den Befestigungsabschnitt günstigen, zentrischen Befestigung steht hier der Nachteil mangelnder Flexibilität entgegen. Eine Anpassung des Höhenabstands der Profilschiene zum Befestigungsabschnitt ist hier ebenso wenig möglich wie eine Ausrichtung der Profilschienen rechtwinklig zu den Stabilisierungsleisten. Sofern diese auf dem Befestigungsabschnitt eines Dachträgers angeordnet sind, müssen je nach gewünschter Ausrichtung der anzubringenden Profilschiene Dachträger mit verschiedenen Befestigungsabschnitten zum Einsatz kommen. Hierdurch wird der Montage- und Fertigungsaufwand in unerwünschter Weise erhöht. Entscheidend für eine zügige, sichere und kostensparende Montage einer Trägeranordnung für Solarmodule ist, neben der Möglichkeit, eine Justierung des Höhenabstands zwischen Trägerprofil und einer wie auch immer gearteten Halterung vornehmen zu können und einer symetrischen Krafteinleitung in eine solche Halterung, dass die Halterung problemlos von oben mit einem Trägerprofil bestückt werden kann und zugleich eine Korrektur der lateralen Ausrichtung des Trägerprofils in Hinblick auf benachbarte Befestigungspunkte möglich ist. Da jeder zusätzliche Handgriff bei der Montage Zeit kostet und die Fehlerquote erhöht, ist es wüschenswert, dass notwendige Befestigungs- oder Spannmittel, wie beispielsweise Schraub- oder Steckverbindungen, in Abwesenheit des einzufügenden Trägerprofils bereits an der Halterung vormontiert sind, um nach Positionierung des Trägerprofils bei der Montage lediglich endfixiert zu werden. Weiterhin ist anzustreben, dass die Verbindung zwischen Trägerprofil und Halterung zwar in jeder gewählten Position ausreichend fest ist, jedoch nicht mit einer plastischen Verformung des Materials einhergeht, da nach einer solchen materialschwächenden Verformung eine Korrektur der gewählten Position nur noch unter inkaufnahme einer weiteren Materialschwächung erfolgen könnte. Abgesehen davon würde der Einsatz plastisch verformbarer Materialien zu einer Einschränkung bei der Auswahl sowohl des Trägerprofil als auch des Halterungsmaterials führen.

Aufgabe der vorliegenden Erfindung ist es, die obengenannten Nachteile des Stands der Technik zu überwinden, eine zügige, sichere und kostensparende Montage einer Trägeranordnung im zuvor beschriebenen Sinne zu ermöglichen, die benannten wünschenswerten Ausgestaltungen realisierbar zu machen und gleichzeitig einen Adapter bereit zu stellen, der grundsätzlich eingesetzt werden kann, wenn Trägerprofile mit Montageflächen verbunden werden sollen.

Dies gelingt durch einen Adapter gemäß Anspruch 1, wobei vorteilhafte Ausgestaltungen des Adapters den Unteransprüchen zu entnehmen sind.

Der erfindungsgemäße Adapter ermöglicht durch seine U-förmige Ausgestaltung eine zentrische Aufnahme des Trägerprofils. Er kann dabei in einfacher Weise von oben bestückt werden. Selbstverständlich Ist eine U-förmige Ausformung nicht zwingend. Die oberen Enden der beiden Schenkel des Montagekopfes können auch miteinander verbunden sein mit der Folge, dass die aufzunehmende Profilschiene in den Montagekopf geschoben werden müssen.

Der Adapter ist mit wenigstens zwei Befestigungsklammern ausgestattet, die vorteilhafterweise mit Schrauben an die Seitenflächen der Schenkel des Montagekopfes gepresst werden und dabei entsprechend ausgeformte Leisten des aufzunehmenden Trägerprofils gegen die Schenkel pressen und fixieren. Eine direkte Verschraubung der Trägerprofile entfällt somit. Vorteilhaft ist es, wenn die Befestigungsktammern Fixationsnasen aufweisen, die in passende Nuten der Profilleisten eingreifen, so dass bei U-förmigem Montagekopf ein Wegrutschen der Trägerprofile in Richtung U-Öffnung wirksam verhindert wird. Die Befestigungsklammern sind vorteilhafterweise im inneren des Montagekopfes angeordnet. Dies gewährleistet minimalen Platzbedarf bezüglich der seitlichen Ausdehnung des Adapters. Eine Anordnung der Befestigungsklammern an den Außenseiten des Montagekopfes ist ebenfalls möglich, vorausgesetzt die Nuten der aufzunehmenden Profilschiene sind so angeordnet, dass sie auf den Außenseiten des Montagekopfes platziert werden können.

Erfindungsgemäß weisen die Befestigungsklammern auf ihren schenkelzugewandten, mit Fixationsnasen versehenen Selten jeweils wenigstens eine Erhebung mit jeweils wenigstens einer Auflagefläche für den Schenkel auf. Bevorzugt weist die Erhebung über der Seitenfläche der Befestigungsklammer eine größere Höhe als die Fixationsnasen auf, so dass diese Erhebungen, die günstigerweise plan am Schenkel anliegen, als Abstandshalter fungieren, dergestalt, dass zwischen Schenkel und Befestigungsklammer im Bereich der Fixationsnase ein der Profilträgerstärke entsprechende Lücke auch bei fest angezogener Verschraubung verbleibt und ein Verkanten der Befestigungsklammer wirksam verhindert wird.

Eine innenliegende Anordnung der Befestigungsklammern ist weiterhin vorteilhaft im Zusammenspiel mit einer vorzugsweise stegartigen Ausformung der Befestigungsklammer an ihrer schenkelabgewandten Fläche, die mit dem Verbindungsmittel für Befestigungsklammer und Schenkel einen das Verbindungsmittel fixierenden Formschluss bildet. Schenkelabgewandt bezieht sich hier auf den der Befestigungsklammer am nächsten gelegenen Schenkel, nicht etwa auf einen der Befestigungsklammer gegenüberliegenden Schenkel. Im Falle eines Sechskantschraubenkopfes liegt eine der sechs Flächen des Schraubenkopfes an dem Steg der Befestigungsklammer an. Dadurch ist es vorteilhafterweise möglich, die zur Schraube passende Mutter an der Außenseite des Schenkels anzuziehen ohne dass sich die Schraube mitdrehen kann. Bei einer solchen Ausführungsform kann also eine Montage der Profilschiene stattfinden, indem die Profilschiene mit ihren Nuten zwischen Schenkel und Befestigungsklammern geführt wird und dann durch Festdrehen der außenliegenden Muttern endgültig fixiert wird. Statt eines Steges kann die Befestigungsklammer auch eine schraubenkopfförmige Vertiefung aufweisen.

Bevor die Profilschiene in den Montagekopf gelegt wird, sollte jedoch der Montagekopf mit dem Dachträger verbunden worden sein. Dazu dient vorteilhafterweise ein zentrisch angebrachtes Vierkantloch im Steg, durch das der Ausleger eines Dachträgers beispielsweise mittels einer Flachrundschraube mit Vierkantansatz verbunden werden kann. Natürlich sind auch anders geformte oder mehrere Aussparungen für Verbindungsmittel im Steg möglich.

Besonders vorteilhaft für die Stabilität der Verbindung ist es, wenn die befestigungsklammerabgewandte Seitenfläche des Schenkels im Bereich der Aussparung für das Verbindungsmittel aufgeraut ist, um den Reibschluss mit dem Verbindungsmittel zu erhöhen. Im Falle einer Schraubverbindung kann die Aufrauung darin bestehen, dass der die Aussparung des Schenkels umgebende Flächenbereich eine Zahnung aufweist. Bei einer Schraubverbindung kann dann zwischen Mutter und gezahnter Fläche eine Zahnscheibe angeordnet sein, die eine zur Zahnung der Fläche komlementäre Zahnung aufweist. Selbstverständlich sind auch andere Verbindungen als Schraubverbindungen mit Muttern möglich. So kann der Schenkel beispielsweise ein integriertes Gewinde aufweisen oder statt einer Schraube-Mutter-Verbindung kann eine Schnellspannverbindung zum Einsatz kommen oder ein lochtragender Stift mit Kopf durch dessen Loch auf der klammerabgewandten Schenkelseite ein leicht konischer Fixierstift gesteckt wird.

Die Aussparungen der Schenkel sind vorzugsweise deckungsgleich und als Langlöcher ausgeführt. Dadurch wird eine Höhenverstellung der Montageposition der aufzunehmenden Profilschiene ermöglicht, was gerade bei der Montage auf Schrägdächern von Vorteil ist, da eine Anpassung vor Ort problemlos möglich ist.

Die Orientierung der Profilschienen ist ebenfalls veränderbar. Der Montagekopf mit zentrischer Aussparung kann vor der Fixation mittels Verbindungsmittel entweder so gedreht werden, dass die von Steg und Schenkel gebildete Kante parallel zum Dachfirst verläuft oder so, dass diese Kante senkrecht zum Dachfirst ausgerichtet ist. Die Ausrichtung der Profilschienen entspricht dabei der Ausrichtung der Kante. Da diese besonderen Krafteinflüssen ausgesetzt ist, wird das Profil des Montagekopfes im Bereich dieser Kante vorteilhafterweise zusätzlich verdickt ausgeführt. Grundsätzlich ermöglicht die zentrische Anordnung der Aussparung des Stegs eine freie Drehbarkeit um die senkrecht zum Steg verlaufende Mittelachse des Montagekopfes.

Eine Schrägstellung der Langlöcher, also eine Positionierung ihrer Längsachsen in einem Winkel kleiner 90° gegenüber der von Steg und Schenkel gebildeten Kante, ermöglicht für beliebige Höhenpositionen des Trägerprofils eine gleichbleibende Belastung der Montageflächen eines oder mehrerer Adapter, je besser die Kraftrichtung der Belastung mit der Längsausrichtung der Langlöcher übereinstimmt. Die von Steg und Schenkel gebildete Kante muss selbstverständlich nicht scharf ausgebildet sein. Es sind verschiedene Varianten möglich, wie beispielsweise mehr oder weniger gerundete Übergangszonen. Bei Verwendung der Adapter für die Montage von Solarmodulen auf Schrägdächern können vorteilhafterweise für verschiedene Dachneigungen Adaptersätze mit entsprechenden Neigungen der Langlöcher bereit gestellt werden.

Zu einer erhöhten Variabilität bei der Anpassung der Neigung des Trägerprofils, beispielsweis gegenüber einem Dachträger, trägt die Möglichkeit bei, die Neigung durch entsprechendes Verdrehen der Befestigungsklammern um ihre Befestigungsachse in gewünschter Weise einzustellen, sofern eine Ausführungsform der Erfindung vorliegt, bei der die Befestigungsart eine Drehung erlaubt. Dies ist regelmäßig der Fall, wenn die Befestigungsklammer mit genau einer, vorzugsweise zentrisch angeordneten Aussparung für das Befestigungsmittel, vorteilhafterweise einer Schraube, versehen ist.

Ein weiterer Vorteil des erfindungsgemäßen Adapters ist neben seiner optimierten Statik, dass minimale Anforderungen an die Ausformung der aufzunehmenden Trägerprofile bestehen. Das Trägerprofil sollte lediglich an der montagekopfzugewandten Seite Leisten mit vorzugsweise für die Befestigungsklammern geeigneten Nuten aufweisen. Ansonsten bestehen keine Restriktionen bezüglich der Ausformung der Trägerprofile. Auf der anderen Seite ist es für eine Montage auf einem Dachträger oder anderen solarmodultragenden Flächen ausreichend, wenn eine im Wesentlichen plane Montagefläche mit Aussparung vorhanden ist, vorzugsweise mit einer zentrisch angeordneten Ausnehmung. Unter einer Aussparung sind hier durchgängige Löcher oder auch nur Vertiefungen innerhalb einer Oberfläche zu verstehen, während Ausnehmungen, als spezielle Form von Aussparungen, ausschließlich durchgänge Löcher bezeichnen.

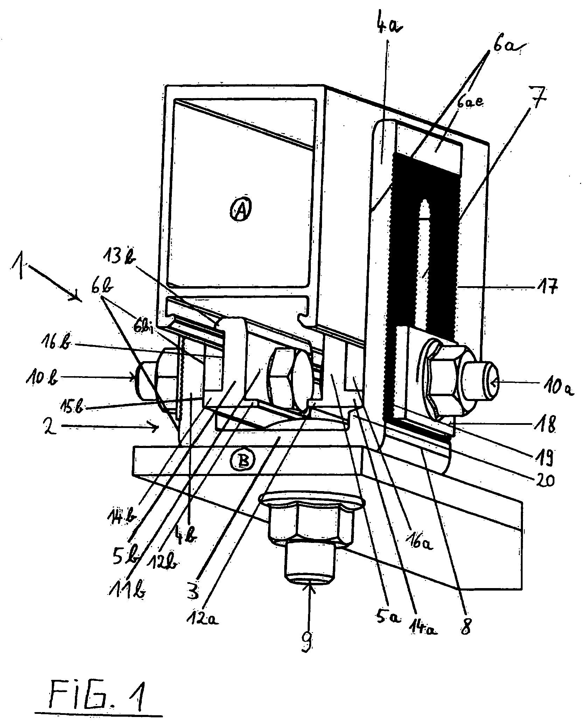

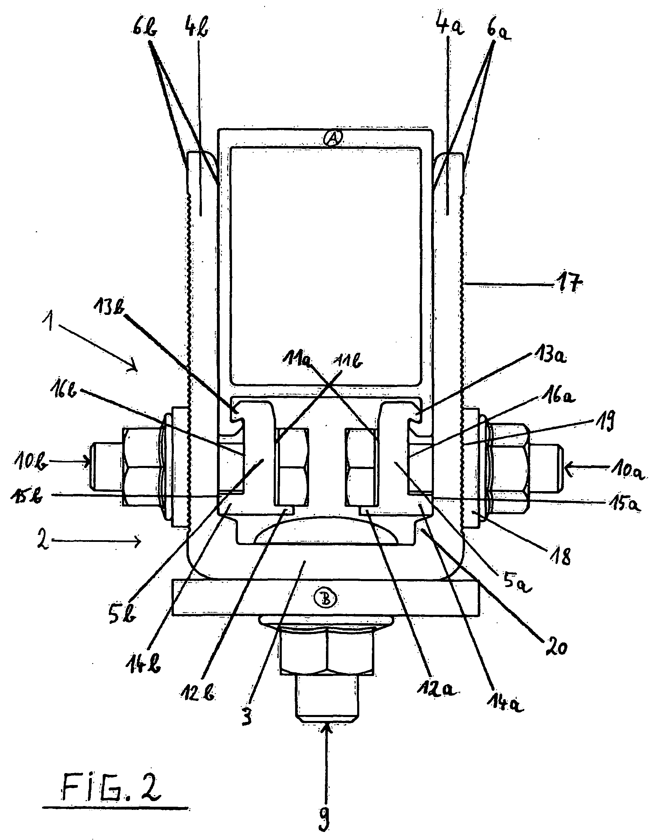

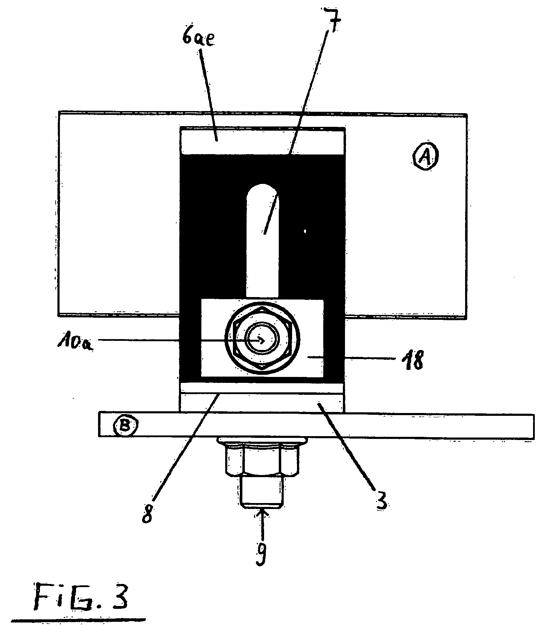

**Fig. 1** zeigt eine vorteilhafte Ausführungsform des erfindungsgemäßen Adapters in der Schrägansicht, montiert auf einer Montagefläche. **Fig**. **2** zeigt dieselbe Ausführungsform im Schnitt und **Fig. 3** in der Seitenansicht. Im Einzelnen zeigen die **Fig. 1** bis **Fig. 3** neben dem Trägerprofil (A) und der Montagefläche (B):
- **1**: Adapter
- **2**: Montagekopf
- **3**: Steg
- **4**: Schenkel **(4a, 4b)**
- **5**: Befestigungsklammern **(5a, 5b)**
- **6**: Seitenflächen der Schenkel **(6a, 6b, 6ae, 6bi)**
- **7**: Aussparungen der Schenkel
- **8**: von Steg und Schenkel gebildete Kante
- **9**: Verbindungsmittel für Montagekopf
- **10**: Verbindungsmittel für Befestigungsklammern **(10a, 10b)**
- **11**: schenkelabgewandte Flächen der Befestigungsklammern **(11a, 11b)**
- **12**: Ausformungen **(12a, 12b)**
- **13**: Fixationsnasen **(13a, 13b)**
- **14**: Erhebungen **(14a, 14b)**
- **15**: Auflagefläche **(15a, 15b)**
- **16**: Seitenflächen der Befestigungsklammern **(16a, 16b)**
- **17**: Zahnung des Schenkels
- **18**: Zahnscheibe
- **19**: Zahnung der Zahnscheibe
- **20**: Verdickung

## Patentansprüche

1. Adapter (1) für Trägerprofile (A), Insbesondere von Trägeranordnungen für Solarmodule, mit einem Montagekopf (2) zur Aufnahme eines Trägerprofils (A), der wenigstens zwei einander gegenüberliegende durch wenigstens einen Steg (3) verbundene Schenkel (4a, 4b) aufweist, und wenigstens zwei mit dem Montagekopf (2) wirkverbundene Befestigungsklammern (5a, 5b) für das aufzunehmende Trägerprofil (A), wobei die Befestigungsklammern (5a, 5b) an den Seitenflächen (6a, 6b) der Schenkel (4a, 4b) angeordnet sind und einander gegenüberliegende Schenkel (4a, 4b) jeweils wenigstens eine, vorzugsweise als Langloch gleicher Form und Ausdehnung ausgebildete, Aussparung (7) aufweisen,
**dadurch gekennzeichnet,**
**dass** die Befestigungsklammern (5a, 5b) auf ihren schenkelzugewandten Seiten jeweils wenigstens eine Erhebung (14a, 14b) mit jeweils wenigstens einer Auflagefläche (15a, 15b) für den Schenkel (4) aufweist.

2. Adapter (1) nach Anspruch 1,
**dadurch gekennzeichnet,**
**dass** die Befestigungsklammern (5a, 5b) jeweils wenigstens eine von der Schenkelfläche (6) beabstandete Fixationsnase (13a, 13b) zum Eingriff in einen Profilträger (A) aufweisen.

3. Adapter nach einem der Ansprüche 1 bis 2,
**dadurch gekennzeichnet,**
**dass** Fixationsnase (13) und Auflagerfläche (15) der Befestigungsklammern (5) an der gleichen schenkelzugewandten Seitenfläche (16) der Befestigungsklammer (5) angeordnet sind und der Abstand der Auflagefläche (15) zur Seitenfläche (16) größer ist als die Höhe der Fixationsnase (13) über dieser Seitenfläche (16).

4. Adapter (1) nach einem der Ansprüche 1 bis 3,
**dadurch gekennzeichnet,**
**dass** wenigsten zwei Befestigungsklammern (5a, 5b) innerhalb des Montagekopfes (2) angeordnet sind.

5. Adapter (1) nach einem der Ansprüche 1 bis 4,
**dadurch gekennzeichnet,**
**dass** die Längsachsen der Langlöcher einander gegenüberliegender Schenkel (4a, 4b) in einem Winkel kleiner 90° zu der von Steg (3) und Schenkel (4) gebildeten Kante (8) angeordnet sind.

6. Adapter (1) nach einem der Ansprüche 1 bis 5,
**dadurch gekennzeichnet,**
**dass** der Steg (3) eine Ausnehmung für ein Verbindungsmittel (9) zur Montage des Montagekopfes (2) auf einer Montagefläche (B) aufweist, wobei die Ausnehmung des Stegs (3) als zentrisch angeordnetes Vierkantloch ausgeführt ist.

7. Adapter (1) nach einem der Ansprüche 1 bis 6,
**dadurch gekennzeichnet,**
**dass** die Befestigungsklammern (5a, 5b) jeweils wenigstens eine Ausnehmung für ein Verbindungsmittel (10a, 10b) aufweisen.

8. Adpater (1) nach einem der Ansprüche 1 bis 7,
**gekennzeichnet durch**
wenigstens eine schraubenvermittelte Wirkverbindung zwischen Befestigungsklammer (5) und einem Schenkel (4) des Montagekopfes (2).

9. Adapter (1) nach einem der Ansprüche 1 bis 8,
**dadurch gekennzeichnet,**
**dass** die schenkelabgewandte Fläche (11) der Befestigungsklammer (5) wenigstens eine Ausformung (12) aufweist, die einen Formschluss mit dem Verbindungsmittel (10) bilden.

10. Adapter (1) nach einem der Ansprüche 1 bis 9,
**dadurch gekennzeichnet,**
**dass** die befestigungsklammerabgewandten Flächen (6) der Schenkel (4) in den an die Ausnehmungen (7) grenzenden Bereichen aufgeraut sind, wobei die aufgerauten Bereiche eine Zahnung (17) und die schraubenvermittelte Wirkverbindung eine Zahnscheibe (18) mit zur Zahnung (17) der Schenkel komplementärer Zahnung (19) aufweisen.

## Claims

1. An adapter (1) for support profiles (A), particularly of support arrangements for solar modules, having a mounting head (2) for accommodating a support profile (A), which has at least two mutually opposite legs (4a, 4b) connected by at least one web (3), and at least two fastening clips (5a, 5b) for the support profile (A) to be accommodated, which are operatively connected to the mounting head (2), wherein the fastening clips (5a, 5b) are arranged at the side faces (6a, 6b) of the legs (4a, 4b) and mutually opposite legs (4a, 4b) have at least one recess (7) in each case, preferably constructed as a slot of identical shape and extent,
**characterised**
**in that** the fastening clips (5a, 5b) have, on their leg-facing sides in each case, at least one elevation (14a, 14b) with at least one bearing face (15a, 15b) for the leg (4) in each case.

2. The adapter (1) according to Claim 1,
**characterised**
**in that** the fastening clips (5a, 5b) in each case have at least one fixation nose (13a, 13b) spaced from the leg face (6) and for engagement into a profile support (A).

3. The adapter according to one of Claims 1 to 2,
**characterised**
**in that** fixation nose (13) and bearing face (15) of the fastening clips (5) are arranged on the same leg-facing side face (16) of the fastening clip (5) and the spacing of the bearing face (15) from the side face (16) is larger than the height of the fixation nose (13) above this side face (16).

4. The adapter (1) according to one of Claims 1 to 3,
**characterised**
**in that** at least two fastening clips (5a, 5b) are arranged inside the mounting head (2).

5. The adapter (1) according to one of Claims 1 to 4,
**characterised**
**in that** the longitudinal axes of the slots of mutually opposite legs (4a, 4b) are arranged at an angle smaller than 90° from the edge (8) formed by web (3) and leg (4).

6. The adapter (1) according to one of Claims 1 to 5,
**characterised**
**in that** the web (3) has a recess for a connecting means (9) for mounting the mounting head (2) on a mounting face (B), wherein the recess of the web (3) is realised as a centrally arranged square hole.

7. The adapter (1) according to one of Claims 1 to 6,
**characterised**
**in that** the fastening clips (5a, 5b) in each case have at least one recess for a connecting means (10a, 10b).

8. The adapter (1) according to one of Claims 1 to 7,
**characterised by**
at least one screw-mediated operative connection between fastening clips (5) and a leg (4) of the mounting head (2).

9. The adapter (1) according to one of Claims 1 to 8,
**characterised**
**in that** the face (11) of the fastening clip (5) facing away from the leg has at least one shaping (12), which forms a positive fit with the connecting means (10).

10. The adapter (1) according to one of Claims 1 to 9,
**characterised**
**in that** the faces (6) of the leg (4) facing away from the fastening clip are roughened in the regions bordering the recesses (7), wherein the roughened regions have a toothing (17) and the screw-mediated operative connection has a toothed washer (18) with a toothing (19) complementary to the toothing (17) of the legs.

## Revendications

1. Adaptateur (1) pour des profilés porteurs (A), notamment pour des dispositif porteurs de modules solaires, avec une tête de montage (2) destinée à recevoir un profilé porteur (A), qui comporte au moins deux branches (4a, 4b) mutuellement opposées, reliées par un listel (3) et au moins deux crampons de fixation (5a, 5b) en liaison active avec la tête de montage (2) pour le profilé porteur (A) qui doit être réceptionné, les crampons de fixation (5a, 5b) étant placés sur les surfaces latérales (6a, 6b) des branches (4a, 4b) et des branches mutuellement opposées (4a, 4b) comportant chacune au moins un dégagement (7), conçu de préférence en tant trou oblong de la même forme et de la même extension,
**caractérisé en ce que**
sur leurs côtés faisant face aux branches, les crampons de fixation (5a, 5b) comportent chacun au moins une élévation (14a, 14b) avec chacune au moins une surface d'appui (15a, 15b) pour les branches (4).

2. Adaptateur (1) selon la revendication 1,
**caractérisé en ce que**
les crampons de fixation (5a, 5b) comportent chacun au moins un tenon de fixation (13a, 13b) écarté de la surface de la branche (6), destiné à s'engager dans un profilé porteur (A).

3. Adaptateur selon l'une quelconque des revendications 1 ou 2,
**caractérisé en ce que**
le tenon de fixation (13) et la surface d'appui (15) des crampons de fixation (5) sont placés sur la même surface latérale (16) qui fait face aux branches du crampon de fixation (5) et **en ce que** l'écart de la surface d'appui (15) par rapport à la surface latérale (16) est supérieur à la hauteur du nez de fixation (13) au-delà de cette surface latérale (16).

4. Adaptateur (1) selon l'une quelconque des revendications 1 à 3,
**caractérisé en ce**
**qu'**au moins deux crampons de fixation (5a, 5b) sont placés à l'intérieur de la tête de montage (2).

5. Adaptateur (1) selon l'une quelconque des revendications 1 à 4,
**caractérisé en ce que**
les axes longitudinaux des trous oblongs de branches (4a, 4b) mutuellement opposées sont placés sous un angle inférieur à 90° par rapport à l'arête (8) formée par le listel (3) et la branche (4).

6. Adaptateur (1) selon l'une quelconque des revendications 1 à 5,
**caractérisé en ce que**
le listel (3) comporte un évidement pour un moyen de liaison (9) pour le montage de la tête de montage (2) sur une surface de montage (B), l'évidement du listel (3) étant conçu en tant que trou carré à disposition centrale.

7. Adaptateur (1) selon l'une quelconque des revendications 1 à 6,
**caractérisé en ce que**
les crampons de fixation (5a, 5b) comportent chacun au moins un évidement pour un moyen de liaison (10a, 10b).

8. Adaptateur (1) selon l'une quelconque des revendications 1 à 7,
**caractérisé par**
au moins une liaison active par l'intermédiaire d'une vis entre le crampon de fixation (5) et une branche (4) de la tête de montage (2).

9. Adaptateur (1) selon l'une quelconque des revendications 1 à 8,
**caractérisé en ce que**
la surface (11) opposée aux branches du crampon de fixation (5) comporte au moins une empreinte (12) qui forme un assemblage par complémentarité de forme avec le moyen de liaison (10).

10. Adaptateur (1) selon l'une quelconque des revendications 1 à 9,
**caractérisé en ce que**
les surfaces (6) opposées au crampon de fixation des branches (4) sont grenelées dans les régions adjacentes aux évidements (7), les régions grenelées comportant une denture (17) et la liaison active par l'intermédiaire de vis comportant une roue dentée (18) avec une denture (19) complémentaire à la denture (17) des branches.
